# EUROPEAN PATENT SPECIFICATION

(11) **EP 2 650 568 B1**
(45) Date of publication and mention of the grant of the patent: **09.11.2016**
(21) Application number: 13160754.1
(22) Date of filing: 25.03.2013
(51) Int. Cl.: F16H 57/027

(54) **Gear box and saddle-type vehicle including the same**
Getriebekasten und Sattelfahrzeug damit
Appareil de transmission et véhicule à selle comprenant celui-ci

(30) Priority: 11.04.2012 JP 2012089954
(43) Date of publication of application: 16.10.2013
(73) Proprietor: Yamaha Hatsudoki Kabushiki Kaisha, SHIZUOKA-KEN 438-8501 (JP)
(72) Inventor: Kawakami, Satoshi, Shizuoka-ken, 438-8501 (JP)
(74) Representative: Stöckeler, Ferdinand

(56) References cited:
- JP-A- H10 138 774
- JP-A- H10 205 609
- JP-A- 2008 082 412
- JP-A- 2009 108 929
- JP-A- 2011 163 429
- JP-U- S6 185 769

## Description

### Technical Field

The present invention relates to a gear box and a saddle-type vehicle including the same.

The present application claims priority from Japanese Patent Application No. 2012-89954, filed on April 11, 2012, which is incorporated by reference herein in its entirety.

### Background Art

A saddle-type vehicle includes a driving source such as an engine or the like and a power transmission device for transmitting the power of the driving source to a driving wheel. As a part of the power transmission device, a gear box including a case for storing oil and a plurality of gears located in the case is known. It is also known that in order to alleviate the rise of pressure in the case, a breather chamber communicated to outside is provided separately from a gear chamber for accommodating the gears. Patent Document 1 describes such a gear box.

The gear box described in Patent Document 1 includes a mission case located on the right and a mission cover located on the left. The mission case and the mission cover are assembled together while having a gasket sandwiched therebetween. The mission case and the mission cover form the above-mentioned case. In the space enclosed by the mission case and the mission cover, a mission chamber (corresponding to the gear chamber mentioned above) and a breather chamber are formed. In the mission chamber, a reduction gear secured to a driven shaft of a belt-type continuously variable transmission and a reduction gear secured to an output shaft are accommodated. At the bottom of the mission chamber, oil is stored. The breather chamber is formed above the mission chamber.

The oil in the mission chamber is swirled up by both of the reduction gears, and injected toward both of the reduction gears, the driven shaft and the output shaft. When the pressure in the mission chamber is raised, air in the mission chamber which has become oil mist flows into the breather chamber, and oil not separated from gas is discharged outside from the breather chamber. In order to solve this problem, Patent Document 1 describes providing a projection piece of the gasket in the vicinity of an entrance of the breather chamber, so that splash of oil is suppressed by the projection piece from jumping into the breather chamber from the mission chamber.

### Citation List

### Patent Literature

Patent document 1: Japanese Examined Utility Model Application Publication No. 2-18851

Closest prior art JP H10 138774 A describes a breather device for a transfer device of an automobile. A pair of boss parts which are integrally projected from the outer surface of the upper part of a transfer casing, are fastened to a mission casing by means of first bolts. A thick wall member filling a space between the first boss parts is integrally incorporated with the transfer casing, and is formed therein with a breather chamber.
The inner space of the transfer casing is communicated with the lower part of the breather chamber through an inlet port part, and the upper part of the breather chamber is communicated with the outside of the transfer casing through an outlet port part. A pair of ribs is arranged at both sides of the inlet port part.

However, even if the splash of oil can be suppressed from jumping into the breather chamber from the mission chamber, it is difficult to guarantee a lubricating property unless oil is supplied to the gears and the like in a satisfactory manner. Therefore, the gear box described in Patent Document 1 needs to store a large amount of oil in the mission chamber in advance in order to provide a sufficient amount of oil to the gears and the like. For this reason, it is difficult to reduce the amount of oil in the mission chamber while guaranteeing the lubricating property of the gears and the like.

### Summary of the Invention

The present invention made in light of this situation has an object of providing a gear box capable of guaranteeing the lubricating property of the gears and the like while allowing the amount of oil to be reduced, and a saddle-type vehicle including such a gear box.

This object is achieved by a gear box of claim 1.

A gear box according to the present invention includes a case in which a gear chamber for storing oil, and a breather chamber separated from the gear chamber by a partition and located above the gear chamber, are formed; a plurality of rotation shafts, each of which is at least partially located in the gear chamber so as to be rotatable, the plurality of rotation shafts extending leftward and rightward; and a plurality of gears located in the gear chamber and respectively provided on the plurality of rotation shafts. The partition has a breather chamber entrance formed therein for communicating the gear chamber and the breather chamber to each other; the case has a breather chamber exit formed therein for communicating the breather chamber and outside of the case to each other; and an inner wall of the case or the partition has a first rib and a second rib formed thereon, the first rib being located forward to the breather chamber entrance and at least partially located above at least one of the gears, and the second rib being located rearward to the breather chamber entrance and at least partially located above at least one of the gears.

According to the gear box of the present invention, the first rib is located forward to the breather chamber entrance, and the second rib is located rearward to the breather chamber entrance. Therefore, the oil is suppressed by the first rib and the second rib from flowing into the breather chamber from gear chamber. Owing to this, the oil is suppressed from flowing outside the case from the gear chamber. In addition, at least a part of the first rib is located above at least one of the plurality of gears, and at least a part of the second rib is located above at least one of the plurality of gears. Therefore, the oil stopped by the first rib and the second rib drops and is supplied to the corresponding gears and rotation shaft. Owing to this, the oil is easily supplied to the gears and the rotation shaft. Thus, the lubricating property of the gears and the like is guaranteed with no need to increase the amount of the oil stored in the gear chamber. Owing to the above, the gear box can guarantee the lubricating property of the gears and the like while reducing the amount of oil.

According to one embodiment of the present invention, the plurality of rotation shafts include a first rotation shaft located below at least a part of the breather chamber; and the first rib is located above the first rotation shaft.

The first rotation shaft is located below at least a part of the breather chamber. Therefore, the oil swirled up by the first rotation shaft and the gear provided on the first rotation shaft (hereinafter, these will be collectively referred to as the "first rotation shaft and the like") has a tendency of flowing into the breather chamber easily. However, since the first rib is located above the first rotation shaft, the oil which is swirled up is effectively suppressed by the first rib from flowing into the breather chamber. The oil which is stopped by the first rib drops and is supplied to the first rotation shaft and the like. Therefore, the lubricating property of the first rotation shaft and the like can be enhanced.

According to one embodiment of the present invention, the second rib is inclined with respect to the vertical direction so as to be directed downward toward a front end thereof.

Therefore, the oil splashed from a position rearward to the breather chamber entrance is easily stopped by the second rib. Owing to this, the oil can be effectively suppressed from flowing into the breather chamber.

According to one embodiment of the present invention, the first rotation shaft is structured to rotate counterclockwise as seen from the left.

Owing to this, the oil swirled up by the first rotation shaft and the like can be effectively suppressed by the second rib from flowing toward the breather chamber entrance.

According to one embodiment of the present invention, a bottom end of the second rib is located at a level lower than that of a bottom end of the first rib.

Since the downward projecting length of the second rib is relatively long as can be seen, the oil can be more effectively suppressed from flowing toward the breather chamber entrance.

According to one embodiment of the present invention, a shaft center of the first rotation shaft is located at a level higher than that of shaft centers of the other rotation shafts.

The first rotation shaft is located at a level higher than those of the other rotation shafts. Therefore, the oil swirled up by the first rotation shaft and the like has a tendency of flowing into the breather chamber easily. However, since the first rib is located above the first rotation shaft, the oil which is swirled up is effectively suppressed by the first rib from flowing into the breather chamber. Therefore, the effects provided by the first rib of suppressing the oil from flowing into the breather chamber and of guaranteeing the lubricating property are exhibited more conspicuously.

According to one embodiment of the present invention, the plurality of rotation shafts include a second rotation shaft located rearward to the first rotation shaft; the plurality of gears include a gear provided on the second rotation shaft; and the inner wall of the case or the partition has a third rib formed thereon which is at least partially located above the gear provided on the second rotation shaft.

Owing to this, the oil swirled up by the second rotation shaft and the gear provided on the second rotation shaft (hereinafter, these will be collectively referred to as the "second rotation shaft and the like") can be suppressed by the third rib from flowing into the breather chamber. In addition, the oil which is stopped by the third rib drops and is supplied to the second rotation shaft and the like. Therefore, the lubricating property of the second rotation shaft and the like can be enhanced.

According to one embodiment of the present invention, the second rotation shaft is structured to rotate counterclockwise as seen from the left.

Owing to this, the oil swirled up by the second rotation shaft and the like can be effectively suppressed by the third rib from flowing toward the breather chamber entrance.

According to one embodiment of the present invention, the second rotation shaft has a diameter larger than those of the other rotation shafts.

Since the diameter of the second rotation shaft is large, the amount of the oil swirled up by the second rotation shaft and the like is increased. However, the oil thus swirled up is effectively suppressed by the third rib from flowing into the breather chamber. In addition, such a large amount of the oil which is stopped by the third rib drops and is supplied to the second rotation shaft and the like. Therefore, the lubricating property of the second rotation shaft and the like can be further enhanced.

According to one embodiment of the present invention, the plurality of rotation shafts include a third rotation shaft having a shaft center located rearward to a shaft center of the first rotation shaft and forward to a shaft center of the second rotation shaft; the shaft center of the third rotation shaft is located at a level lower than those of the shaft center of the first rotation shaft and the shaft center of the second rotation shaft; the plurality of gears include a gear provided on the third rotation shaft; and the inner wall of the case has a fourth rib formed thereon which is at least partially located forward to the gear provided on the third rotation shaft.

Owing to this, the oil swirled up by the third rotation shaft and the gear provided on the third rotation shaft (hereinafter, these will be collectively referred to as the "third rotation shaft and the like") can be suppressed by the fourth rib from flowing into the breather chamber. In addition, the oil which is stopped by the fourth rib changes the flowing direction thereof and is supplied to the third rotation shaft and the like. Therefore, the lubricant property of the third rotation shaft and the like can be enhanced.

According to one embodiment of the present invention, the third rotation shaft is structured to rotate clockwise as seen from the left.

Since the oil is swirled up by the third rotation shaft and the like, a flow of the oil from a position below the third rotation shaft to a position above the third rotation shaft is formed. However, such a flow of the oil can be suppressed by the fourth rib. Owing to this, the oil can be suppressed from flowing into the breather chamber. In addition, the fourth rib can stop a larger amount of the oil, and the oil can be supplied to the third rotation shaft and the like. Owing to this, the lubricating property of the third rotation shaft and the like can be enhanced.

According to one embodiment of the present invention, the first rib and the second rib extend leftward and rightward.

Owing to this, the oil can be further suppressed from flowing into the breather chamber, and also, a larger amount of the oil can be supplied to the corresponding rotation shafts and gears. Therefore, the lubricating property of the gear and the like can be highly guaranteed while the amount of oil can be significantly reduced.

According to one embodiment of the present invention, the case has bearings formed thereon for supporting one of the rotation shafts; and the inner wall of the case has another rib formed thereon which extends in a diametric direction of the one of the rotation shafts, the another rib being located in the vicinity of the bearings.

Owing to this, the oil can be supplied to the bearings from the inner wall of the case along the another rib. Therefore, the lubricating property of the gear and the like can be further enhanced.

According to one embodiment of the present invention, the case includes a case main body, and a cover located to the right or to the left of the case main body and assembled with the case main body; the first rib is formed of a rib portion provided in the case main body and a rib portion provided in the cover; and the second rib is formed of a rib portion provided in the case main body and a rib portion provided in the cover.

In this manner, the first rib and the second rib are provided on both of the case and the cover. Therefore, the oil can be further suppressed from flowing into the breather chamber. In addition, a larger amount of the oil can be supplied to the corresponding rotation shafts and gears. The lubricating property of the gear and the like can be highly guaranteed while the amount of oil can be significantly reduced.

According to one embodiment of the present invention, the cover has bearings formed thereon for supporting one of the rotation shafts; and the inner wall of the cover has another rib formed thereon which extends in a diametric direction of the one of the rotation shafts, the another rib being located in the vicinity of the bearings.

Owing to this, the oil can be supplied to the bearings from the inner wall of the case along the another rib. Therefore, the lubricating property of the gear and the like can be further enhanced.

According to one embodiment of the present invention, the plurality of rotation shafts include a second rotation shaft located rearward to the first rotation shaft and a third rotation shaft having a shaft center located rearward to a shaft center of the first rotation shaft and forward to a shaft center of the second rotation shaft; the shaft center of the third rotation shaft is located at a level lower than those of the shaft center of the first rotation shaft and the shaft center of the second rotation shaft; the plurality of gears include a gear provided on the second rotation shaft and a gear provided on the third rotation shaft; and while the first, second and third rotation shafts are at a stop, a liquid surface of the oil is at a level which is higher than that of a bottom end of the gear provided on the third rotation shaft and is lower than those of the shaft center of the first rotation shaft, the shaft center of the second rotation shaft and the shaft center of the third rotation shaft, respectively.

Even when the liquid surface is at such a low level and the amount of the oil is small, the lubricating property of the gear and the like can be guaranteed. Therefore, the lubricating property of the gear and the like can be highly guaranteed while the amount of oil can be significantly reduced.

A saddle-type vehicle according to the present invention includes the above-described gear box.

According to the present invention, a saddle-type vehicle exhibiting the above-described functions and effects can be obtained.

A saddle-type vehicle according to the present invention includes an engine including a crankshaft; a continuously variable transmission including a driving pulley coupled to the crankshaft, a subordinate pulley, and a belt extended along the driving pulley and the subordinate pulley; a subordinate shaft coupled to the subordinate pulley; a first gear provided on the subordinate shaft; a second gear engaged with the first gear; an intermediate shaft having the second gear provided thereon; a third gear provided on the intermediate shaft; a fourth gear engaged with the third gear; and a drive shaft having the fourth gear provided thereon and coupled to a driving wheel. The plurality of rotation shafts include the subordinate shaft, the intermediate shaft and the drive shaft; and the plurality of gears include the first, second, third and fourth gears.

Owing to this, a portion for transmitting the power from the subordinate shaft coupled to the subordinate pulley of the continuously variable transmission to the drive shaft can provide the above-described functions and effects.

### Advantageous Effect of Invention

As described above, the present invention provides a gear box capable of guaranteeing the lubricating property of the gears and the like while allowing the amount of oil to be reduced, and a saddle-type vehicle including such a gear box.

### Brief Description of Drawings

FIG. 1 is a left side view showing a motorcycle in an embodiment according to the present invention.
FIG. 2 is an internal cross-sectional view showing an engine unit in the embodiment according to the present invention.
FIG. 3 is a cross-sectional view showing a gear box in the embodiment according to the present invention.
FIG. 4 is a vertical cross-sectional view showing the gear box in the embodiment according to the present invention.
FIG. 5 is a perspective view showing a case portion included in the gear box in the embodiment according to the present invention.
FIG. 6 is a perspective view showing a cover portion included in the gear box in the embodiment according to the present invention.
FIG. 7 is a vertical cross-sectional view showing a flow of oil in the gear box in the embodiment according to the present invention.

### Description of Embodiments

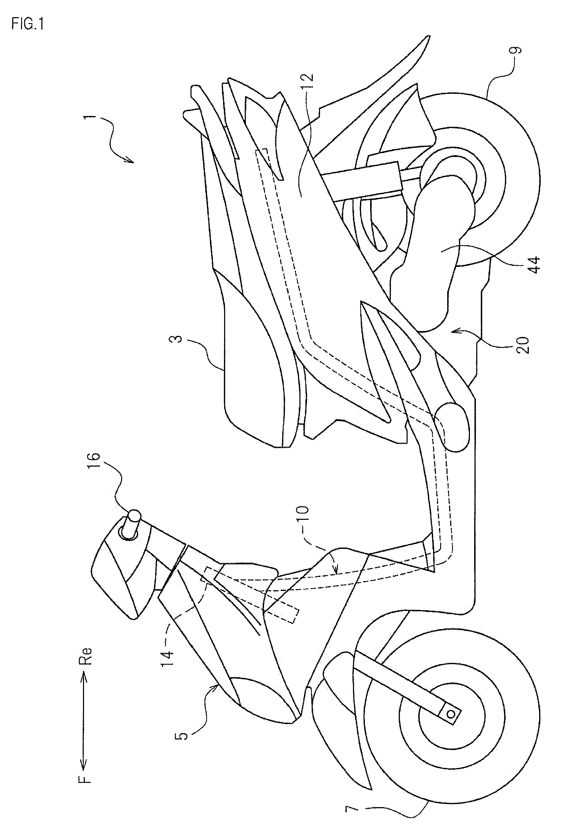

Hereinafter, an embodiment of the present invention will be described. As shown in FIG. 1, a saddle-type vehicle in this embodiment is a motorcycle 1 of a scooter type. The motorcycle 1 is not limited to any particular type, and may be of a so-called moped type, off-road type, on-road type or the like. A saddle-type vehicle according to the present invention is not limited to a motorcycle, and may be an ATV (All Terrain Vehicle) or the like. The "saddle-type vehicle" refers to a vehicle which a rider rides astride.

In the following description, the terms "front", "rear", "left" and "right" respectively mean front, rear, left and right as seen from a rider of the motorcycle 1. In the figures, F, Re, L and R respectively indicate front, rear, left and right.

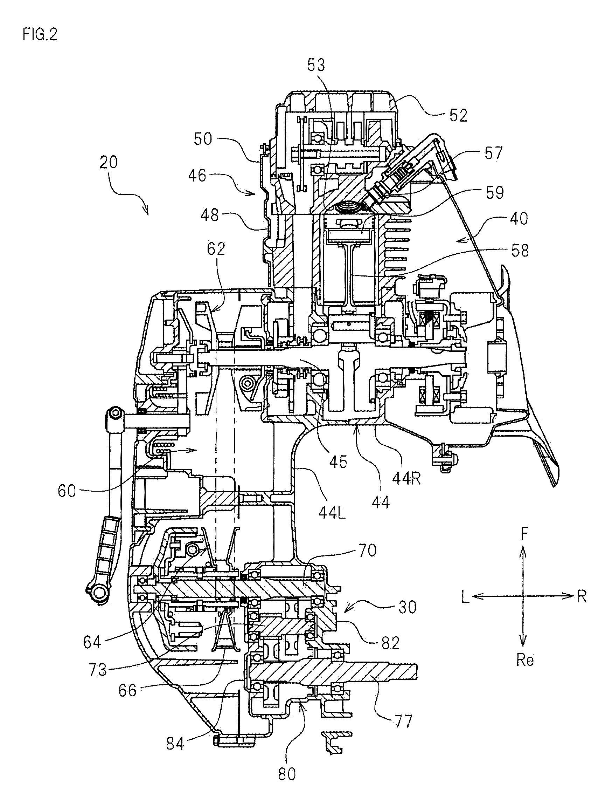

As shown in FIG. 1, the motorcycle 1 includes a vehicle main body 5, a front wheel 7, a rear wheel 9, and an engine unit 20 for driving the rear wheel 9. The vehicle main body 5 includes a seat 3, a body frame 10, and a frame cover 12 attached to the body frame 10. Forward to the body frame 10, a head pipe 14 is provided. The head pipe 14 supports a steering shaft (not shown). A handle 16 is provided on the steering shaft. An engine unit 20 is of a so-called unit swing type and includes an engine 40 (see FIG. 2) as an example of combustion engine. The engine unit 20 is supported by a pivot shaft (not shown) so as to be swingable with respect to the body frame 10.

As shown in FIG. 2, the engine unit 20 includes the engine 40 and a belt-type continuously variable transmission (hereinafter, referred to as a "CVT") 60. The engine 40 includes a crankcase 44, a cylinder block 48 extending forward in the motorcycle 1 (see FIG. 1) from the crankcase 44 generally horizontally, a cylinder head 50 connected to a top portion of the cylinder block 48, and a cylinder head cover 52 connected to a top portion of the cylinder head 50. In this specification, the cylinder block 48, the cylinder head 50 and the cylinder head cover 52 will be collectively referred to as a "cylinder section 46". The cylinder section 46 projects forward generally horizontally from a front end of the crankcase 44. The crankcase 44 is formed of a combination of a left crankcase 44L and a right crankcase 44R. The CVT 60 is located to the left of the crankcase 44.

The cylinder head 50 has a recessed portion 53, and an intake port (not shown) and an exhaust port (not shown) connected to the recessed portion 53. A combustion chamber 57 is formed of a top surface of a piston 59, an inner circumferential wall of the cylinder block 48, and the recessed portion 53. The piston 59 is coupled to a crankshaft 45 via a connection rod 58. The crankshaft 45 extends leftward and rightward in the motorcycle 1 (see FIG. 1) and is accommodated in the crankcase 44.

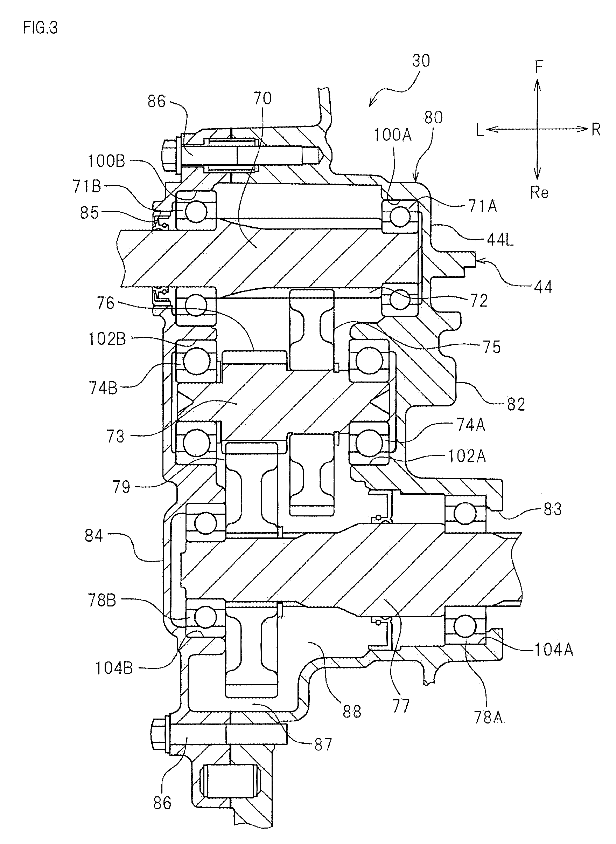

The CVT 60 includes a first pulley 62, which is a driving pulley, a second pulley 64, which is a subordinate pulley, and a V-belt 66 extending along the first pulley 62 and the second pulley 64. The first pulley 62 is attached to a left end of the crankshaft 45. The second pulley 64 is attached to a secondary shaft 70, which is a first rotation shaft. As shown in FIG. 3, the secondary shaft 70 is coupled to a drive shaft 77, which is a second rotation shaft, via a main shaft 73, which is a third rotation shaft. The drive shaft 77 is coupled to the rear wheel (see FIG. 1). The secondary shaft 70, the main shaft 73, and the drive shaft 77 each extend leftward and rightward in the motorcycle 1 (see FIG. 1).

As shown in FIG. 2, a gear box 30 is formed rearward to the left crankcase 44L. As shown in FIG. 3, the gear box 30 includes a mission case 80 acting as a part of the crankcase 44, the secondary shaft 70, the main shaft 73, and the drive shaft 77. The mission case 80 includes a case portion 82 acting as a part of the crankcase 44, and a cover portion 84 for covering an opening 87 of the case portion 82. The case portion 82 and the cover portion 84 are secured to each other by bolts 86.

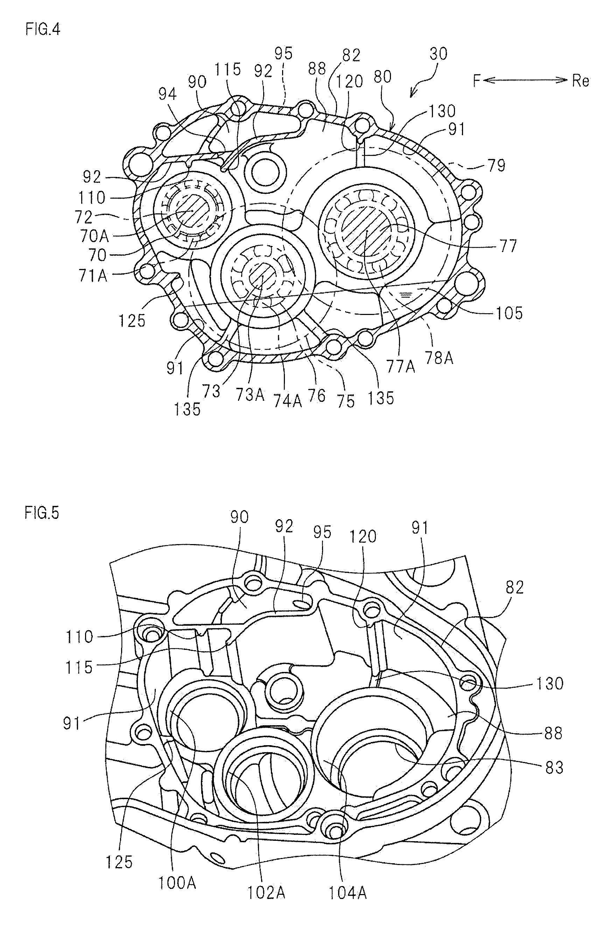

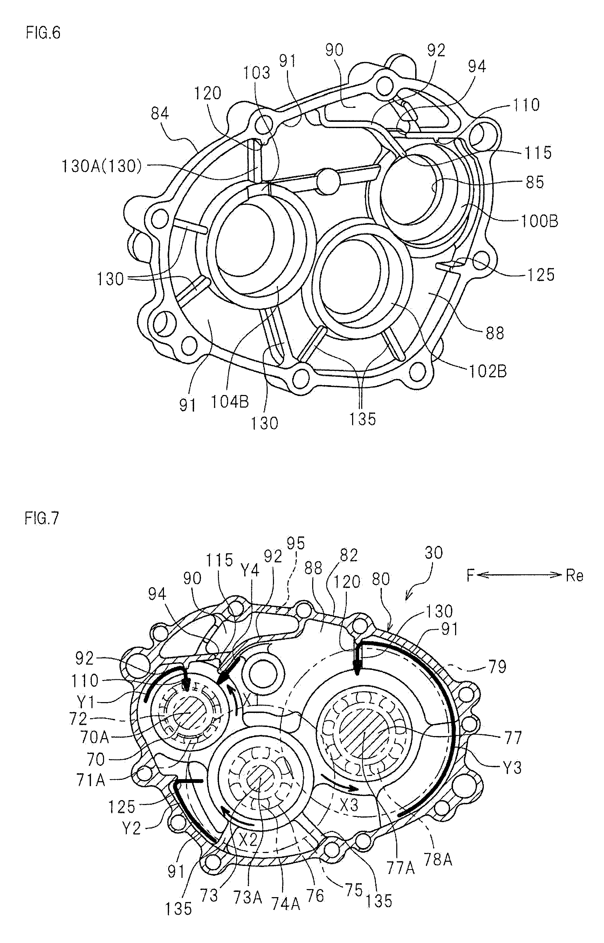

As shown in FIG. 4, in the mission case 80, a gear chamber 88 having oil stored therein and a breather chamber 90 are formed. The breather chamber 90 is separated from the gear chamber 88 by a partition 92 formed in the mission case 80. The breather chamber 90 is located above the gear chamber 88. As shown in FIG. 4, the partition 92 has a breather chamber entrance 94 formed therein for communicating the gear chamber 88 and the breather chamber 90 to each other. As shown in FIG. 6, the breather chamber entrance 94 is provided in the cover portion 84. As shown in FIG. 4, the mission case 80 has a breather chamber exit 95 formed therein for communicating the breather chamber 90 and outside of the mission case 80 to each other. As shown in FIG. 5, the breather chamber exit 95 is formed in the case portion 82.

As shown in FIG. 3, the following portions are molded in the case portion 82: a secondary shaft bearing holding portion 100A into which bearings 71A of the secondary shaft 70 are fit, a main shaft bearing holding portion 102A into which bearings 74A of the main shaft 73 are fit, and a drive shaft bearing holding portion 104A into which bearings 78A of the drive shaft 77 are fit. In the case portion 82, a through-hole 83 is formed to the right of the drive shaft bearing holding portion 104A.

As shown in FIG. 3, the following portions are molded in the cover portion 84: a secondary shaft bearing holding portion 100B into which bearings 71B of the secondary shaft 70 are fit, a main shaft bearing holding portion 102B into which bearings 74B of the main shaft 73 are fit, and a drive shaft bearing holding portion 104B into which bearings 78B of the drive shaft 77 are fit. In the cover portion 84, a through-hole 85 is formed to the left of the secondary shaft bearing holding portion 100B.

As shown in FIG. 3, in the gear box 30, the secondary shaft 70, the main shaft 73, and the drive shaft 77 are located in this order from the front to the rear of the gear box 30 (in other words, from the front to the rear of the motorcycle 1). A part of each of the secondary shaft 70 and the drive shaft 77 is located in the gear chamber 88 in the mission case 80. This part of the secondary shaft 70 is located in the gear chamber 88 so as to be rotatable about a shaft center thereof via the bearings 71A and 71B. A part of the secondary shaft 70 is inserted into the through-hole 85 to project outside the cover portion 84, and is coupled to the second pulley 64 (see FIG. 2). The above-mentioned part of the drive shaft 77 is located in the gear chamber 88 so as to be rotatable about a shaft center thereof via the bearings 78A and 78B. A part of the drive shaft 77 is inserted into the through-hole 83 to project outside the case portion 82, and is coupled to the rear wheel 9 (see FIG. 1). The main shaft 73 is located in the gear chamber 88 so as to be rotatable about a shaft center thereof via the bearings 74A and 74B.

The secondary shaft 70 is structured to rotate counterclockwise as seen from the left (see FIG. 7). The drive shaft 77 is structured to rotate counterclockwise as seen from the left. The main shaft 73 is structured to rotate clockwise as seen from the left.

As shown in FIG. 4, the secondary shaft 70 and the main shaft 73 are located below the breather chamber 90. A shaft center 70A of the secondary shaft 70 is located at a level higher than those of a shaft center 77A of the drive shaft 77 and a shaft center 73A of the main shaft 73. The shaft center 73A is located rearward to the shaft center 70A and forward to the shaft center 77A. The shaft center 73A is located at a level lower than those of the shaft center 70A and the shaft center 77A. The drive shaft 77 has a diameter larger than those of the secondary shaft 70 and the main shaft 73.

The secondary shaft 70 is provided with a secondary gear 72 which rotates together with the secondary shaft 70 in the gear chamber 88. The main shaft 73 is provided with a first main gear 75 which rotates together with the main shaft 73 and is engaged with the secondary gear 72 in the gear chamber 88, and also is provided with a second main gear 76 which rotates together with the main shaft 73 in the gear chamber 88. The drive shaft 77 is provided with a drive gear 79 which rotates together with the drive shaft 77 and is engaged with the second main gear 76 in the gear chamber 88.

As shown in FIG. 4, the partition 92 of the mission case 80 is provided with a first rib 110 located forward to the breather chamber entrance 94. At least a part of the first rib 110 is located above (e.g., right above) the secondary shaft 70, the secondary gear 72 and the first main gear 75. The first rib 110 projects from the partition 92 toward the secondary shaft 70. The first rib 110 projects downward. Alternatively, the first rib 110 may project obliquely downward. The partition 92 of the mission case 80 is provided with a second rib 115 located rearward to the breather chamber entrance 94. At least a part of the second rib 115 is located above (e.g., right above) the first main gear 75. The second rib 115 is inclined with respect to the vertical direction so as to be directed downward from a rear end toward a front end thereof in the mission case 80. A bottom end of the second rib 115 is located at a level lower than that of a bottom end of the first rib 110. The first rib 110 and the second rib 115 may be formed on an inner wall 91 of the mission case 80. The first rib 110 and the second rib 115 merely need to be formed above (e.g., right above) at least one of the secondary gear 72, the first main gear 75, the second main gear 76 and the drive gear 79.

In this specification, the term "right above" refers to a situation where relevant members (ribs, gears) are located on the same vertical line.

On the inner wall 91 of the mission case 80, a third rib 120 is located rearward to the breather chamber 90. At least a part of the third rib 120 is located above (e.g., right above) the drive gear 79 provided on the drive shaft 77. At least a part of the third rib 120 is located above (e.g., right above) the drive shaft 77. The third rib 120 projects from the inner wall 91 toward the drive shaft 77. The third rib 120 projects downward. Alternatively, the third rib 120 may project obliquely downward. In the case where the breather chamber 90 is formed above the drive shaft 77 and the drive gear 79, the third rib 120 may be formed on the partition of the breather chamber 90.

On the inner wall 91 of the mission case 80, a fourth rib 125 is located forward to the main shaft 73. At least a part of the fourth rib 125 is located forward to the first main gear 75 and the second main gear 76. The fourth rib 125 is located below the secondary shaft 70 and the secondary gear 72. The fourth rib 125 projects from the inner wall 91 toward the main shaft 73. The fourth rib 125 projects rearward.

As shown in FIG. 5 and FIG. 6, the first rib 110, the second rib 115, the third rib 120 and the fourth rib 125 are formed to extend over the entirety of the left-right direction in the space enclosed by the case portion 82 and the cover portion 84. Namely, the first rib 110, the second rib 115, the third rib 120 and the fourth rib 125 are formed to extend over the entirety of the left-right direction in the mission case 80, which is an assembly of the case portion 82 and the cover portion 84.

As shown in FIG. 6, on the inner wall 91 of the cover portion 84, a plurality of fifth ribs 130 extending in a diametric direction of the drive shaft 77 (see FIG. 3) are formed. The plurality of fifth ribs 130 are arranged in an arranging direction of the bearings 78B (see FIG. 3) fit into the drive shaft bearing holding portion 104B. Also on the inner wall 91 of the cover portion 84, a plurality of sixth ribs 135 extending in a diametric direction of the main shaft 73 (see FIG. 3) are formed. The plurality of sixth ribs 135 are arranged in an arranging direction of the bearings 74B (see FIG. 3) fit into the main shaft bearing holding portion 102B. The drive shaft bearing holding portion 104B has a groove 103 formed therein as a supply path of oil to the bearings 78B and the drive shaft 77. The groove 103 is formed below a vertical rib 130A extending generally in the vertical direction, among the fifth ribs 130. The groove 103 is formed below the third rib 120. Oil 105 (see FIG. 4) stopped by the vertical rib 130A is supplied to the bearings 78B and the like via the groove 103. As shown in FIG. 5, on the inner wall 91 of the case portion 82, the fifth rib 130 extending in the diametric direction of the drive shaft 77 (see FIG. 3) is formed. The fifth rib 130 is formed in the vicinity of the bearings 78A (see FIG. 3) fit into the drive shaft bearing holding portion 104A. On the inner wall 91 of the cover portion 84, the plurality sixth ribs 135 (see FIG. 4) extending in the diametric direction of the main shaft 73 (see FIG. 3) are formed. The sixth ribs 135 are arranged in an arranging direction of the bearings 74A (see FIG. 3) fit into the main shaft bearing holding portion 102A.

As shown in FIG. 4, in the gear chamber 88, the oil 105 is stored for lubricating the shafts, namely, the secondary shaft 70, the main shaft 73 and the drive shaft 77, and the gears, namely, the secondary gear 72, the first main gear 75, the second main gear 76 and the drive gear 79. When the secondary shaft 70, the main shaft 73 and the drive shaft 77 are at a stop, a liquid surface of the oil 105 is at a level which is higher than that of a bottom end of the first main gear 75 provided on the main shaft 73 and is lower than those of the shaft center 70A of the secondary shaft 70, the shaft center 77A of the drive shaft 77 and the shaft center 73A of the main shaft 73, respectively. For example, the liquid surface of the oil 105 is at a level which is higher than that of the bottom end of the first main gear 75 and is lower than that of the shaft center 73A of the main shaft 73. A gasket (not shown) is provided at a contact portion of the case portion 82 and the cover portion 84 in order to prevent the oil from leaking from the mission case 80. Owing to this, the contact portion of the case portion 82 and the cover portion 84 is sealed.

Now, a flow of the oil in the gear box 30 while the motorcycle 1 is running will be described with reference to the drawings.

The driving force of the engine 40 is transmitted to the secondary shaft 70 via the crankshaft 45 and the CVT 60. When the secondary shaft 70 is rotated in a direction of arrow X1 in FIG. 7, the main shaft 73 is rotated in a direction of arrow X2 in FIG. 7 because the secondary gear 72 and the first main gear 75 are engaged with each other. By the engagement of the second main gear 76 and the drive gear 79, the drive shaft 77 is rotated in a direction of arrow X3 in FIG. 7, and thus the driving force of the engine 40 is transmitted to the rear wheel 9.

In this process, as represented by arrow Y1 in FIG. 7, the oil which is swirled from a lower position to an upper position by the first main gear 75 and the like flows toward the breather chamber entrance 94 along the inner wall 91 in a front portion of the mission case 80. The flowing oil is stopped by the first rib 110 and drops. Therefore, the oil is suppressed from entering the breather chamber 90. The oil which is stopped by the first rib 110 and drops is supplied to the secondary shaft 70 and the secondary gear 72. Therefore, the lubricant property of the secondary gear 72 and the like is guaranteed.

As represented by arrow Y4 in FIG. 7, the oil which is swirled from a lower position to an upper position by the secondary gear 72 and the like is stopped by the second rib 115. Therefore, the oil can be effectively suppressed from flowing toward the breather chamber entrance 94. The oil which is stopped by the second rib 115 and drops is supplied to the secondary gear 72 and the like, and therefore, the lubricant property thereof is guaranteed.

As represented by arrow Y3 in FIG. 7, the oil which is swirled from a lower position to an upper position by the drive gear 79 and the like flows toward the breather chamber entrance 94 along the inner wall 91 in a rear portion of the mission case 80. The flowing oil is stopped by the third rib 120 and drops. Therefore, the oil is suppressed from entering the breather chamber 90. The oil which is stopped by the third rib 120 and drops is supplied to the drive shaft 77 and the drive gear 79. Therefore, the lubricant property of the drive gear 79 and the like is guaranteed.

As represented by arrow Y2 in FIG. 7, the oil which is swirled from a lower position to an upper position by the first main gear 75 and the like flows along the inner wall 91 in a front portion of the mission case 80. The flowing oil is stopped by the fourth rib 125. Therefore, the oil is suppressed from flowing toward the breather chamber entrance 94. The oil which is stopped by the fourth rib 125 changes the flowing direction thereof and is supplied to the first main gear 75 and the like. Therefore, the lubricant property of the first main gear 75 and the like is guaranteed.

As described above, in the gear box 30 in this embodiment, the first rib 110 is located forward to the breather chamber entrance 94, and the second rib 115 is located rearward to the breather chamber entrance 94. Therefore, the oil is suppressed by the first rib 110 and the second rib 115 from flowing into the breather chamber 90 from the gear chamber 88. Owing to this, the oil 105 is suppressed from flowing outside the mission case 80 from the gear chamber 88. In addition, at least a part of the first rib 110 is located above (e.g., right above) the secondary gear 72 and the first main gear 75, and at least a part of the second rib 115 is located above (e.g., right above) the first main gear 75. Therefore, the oil 105 stopped by the first rib 110 and the second rib 115 drops and is supplied to the secondary shaft 70, the secondary gear 72 and the first main gear 75. Owing to this, the oil is easily supplied to the gears 72 and 75 and the secondary shaft 70. Thus, the lubricating property of the gear 72 and the like is guaranteed with no need to increase the amount of the oil stored in the gear chamber. Owing to the above, the gear box 30 can guarantee the lubricating property of the gear 72 and the like while reducing the amount of oil.

According to this embodiment, the secondary shaft 70 is located below at least a part of the breather chamber 90. Therefore, the oil 105 swirled up by the secondary shaft 70 and the secondary gear 72 has a tendency of flowing into the breather chamber 90 easily. However, since the first rib 110 is located above (e.g., right above) the secondary shaft 70, the oil 105 which is swirled up is effectively suppressed by the first rib 110 from flowing into the breather chamber 90. The oil which is stopped by the first rib 110 drops and is supplied to the secondary shaft 70 and the secondary gear 72. Therefore, the lubricating property of the secondary shaft 70 and the secondary gear 72 can be enhanced.

According to this embodiment, the second rib 115 is inclined with respect to the vertical direction so as to be directed downward from a rear end toward a front end thereof. Therefore, the oil 105 splashed from a position rearward to the breather chamber entrance 94 is easily stopped by the second rib 115. Owing to this, the oil 105 can be effectively suppressed from flowing into the breather chamber 90.

According to this embodiment, the secondary shaft 70 is structured to rotate counterclockwise as seen from the left. Owing to this, the oil 105 swirled up by the secondary shaft 70 and the secondary gear 72 can be effectively suppressed by the second rib 115 from flowing toward the breather chamber entrance 94.

According to this embodiment, the bottom end of the second rib 115 is located at a level lower than that of the bottom end of the first rib 110. Since the downward projecting length of the second rib 115 is relatively long as can be seen, the oil 105 can be suppressed from flowing toward the breather chamber entrance 94 more effectively.

According to this embodiment, the shaft center 70A of the secondary shaft 70 is located at a level higher than those of the shaft center 73A of the main shaft 73 and the shaft center 77A of the drive shaft 77. The secondary shaft 70 is located at a level higher than those of the other rotation shafts 73 and 77. Therefore, the oil 105 swirled up by the secondary shaft 70 and the secondary gear 72 has a tendency of flowing into the breather chamber 90 easily. However, since the first rib 110 is located above (e.g., right above) the secondary shaft 70, the oil 105 which is swirled up is effectively suppressed by the first rib 110 from flowing into the breather chamber 90. Therefore, the effects provided by the first rib 110 of suppressing the oil 105 from flowing into the breather chamber 90 and of guaranteeing the lubricating property are exhibited more conspicuously.

According to this embodiment, on the inner wall 91 of the mission case 80, the third rib 120 is provided above (e.g., right above) the drive gear 79, which is at least partially provided on the drive shaft 77. Owing to this, the oil 105 swirled up by the drive shaft 77 and the drive gear 79 can be suppressed by the third rib 120 from flowing into the breather chamber 90. In addition, the oil 105 which is stopped by the third rib 120 drops and is supplied to the drive shaft 77 and the like. Therefore, the lubricating property of the drive shaft 77 and the like can be enhanced.

According to this embodiment, the drive shaft 77 is structured to rotate counterclockwise as seen from the left. Owing to this, the oil 105 swirled up by the drive shaft 77 and the like can be effectively suppressed by the third rib 120 from flowing toward the breather chamber entrance 94.

According to this embodiment, the diameter of the drive shaft 77 is larger than those of the secondary shaft 70 and the main shaft 73. Since the diameter of the drive shaft 77 is large, the amount of the oil 105 swirled up by the drive shaft 77 and the like is increased. However, the oil 105 thus swirled up is effectively suppressed by the third rib 120 from flowing into the breather chamber 90. In addition, such a large amount of the oil 105 which is stopped by the third rib 120 drops and is supplied to the drive shaft 77 and the like. Therefore, the lubricating property of the drive shaft 77 and the like can be further enhanced.

According to this embodiment, the shaft center 73A of the main shaft 73 is located at a level lower than those of the shaft center 70A of the secondary shaft 70 and the shaft center 77A of the drive shaft 77. On the inner wall 91 of the mission case 80, the fourth rib 125 is provided forward to the first and second main gears 75 and 76, which are at least partially provided on the main shaft 73. Owing to this, the oil 105 swirled up by the main shaft 73, the first main gear 75 and the second main gear 76 can be suppressed by the fourth rib 125 from flowing into the breather chamber 90. In addition, the oil 105 which is stopped by the fourth rib 125 changes the flowing direction thereof and is supplied to the main shaft 73 and the like. Therefore, the lubricant property of the main shaft 73 and the like can be enhanced.

According to this embodiment, the main shaft 73 is structured to rotate clockwise as seen from the left. Since the oil 105 is swirled up by the main shaft 73 and the like, a flow of the oil 105 from a position below the main shaft 73 to a position above the main shaft 73 is formed. However, such a flow of the oil 105 can be suppressed by the fourth rib 125. Owing to this, the oil 105 can be suppressed from flowing into the breather chamber 90. In addition, the fourth rib 125 can stop a larger amount of the oil 105, and the oil 105 can be supplied to the main shaft 73 and the like. Owing to this, the lubricating property of the main shaft 73 and the like can be enhanced.

According to this embodiment, the first rib 110 and the second rib 115 extend leftward and rightward. Owing to this, the oil 105 can be further suppressed from flowing into the breather chamber 90, and also, a larger amount of the oil 105 can be supplied to the secondary gear 72, the first main gear 75 and the secondary shaft 70. Therefore, the lubricating property of the gear 72 and the like can be highly guaranteed while the amount of oil can be significantly reduced.

According to this embodiment, on the mission case 80, the bearings 78A and 78B for supporting the drive shaft 77 are provided. On the inner wall 91 of the mission case 80, the fifth ribs 130 extending in the diametric direction of the drive shaft 77 are formed in an arranging direction of the bearings 78A and 78B. In the mission case 80, the bearings 74A and 74B for supporting the main shaft 73 are provided. On the inner wall 91 of the mission case 80, the sixth ribs 135 extending in the diametric direction of the main shaft 73 are formed in an arranging direction of the bearings 74A and 74B. Owing to this, the oil 105 can be supplied to the bearings 78A and the like from the inner wall 91 of the mission case 80 along the fifth and sixth ribs 130 and 135. Therefore, the lubricating property of the drive gear 79 and the like can be further enhanced.

According to this embodiment, the mission case 80 includes the case portion 82, and the cover portion 84 located to the left of the case portion 82 and assembled with the case portion 82. The first rib 110 provided in the mission case 80 is formed of the first rib 110 provided in the case portion 82 and the first rib 110 provided in the cover portion 84. The second rib 115 provided in the mission case 80 is formed of the second rib 115 provided in the case portion 82 and the second rib 115 provided in the cover portion 84. In this manner, the first rib 110 and the second rib 115 are provided in both of the case portion 82 and the cover portion 84. Therefore, the oil 105 can be further suppressed from flowing into the breather chamber 90. In addition, a larger amount of the oil 105 can be supplied to the secondary gear 72 and the like. The lubricating property of the secondary gear 72 and the like can be highly guaranteed while the amount of oil can be significantly reduced.

According to this embodiment, in the cover portion 84, the bearings 78B for supporting the drive shaft 77 and the bearings 74B for supporting the main shaft 73 are provided. On the inner wall 91 of the cover portion 84, the fifth ribs 130 and the sixth ribs 135 respectively extending in the diametrical directions of the drive shaft 77 and the main shaft 73 are respectively provided in arranging directions of the bearings 78B and 74B. Owing to this, the oil 105 can be supplied from the inner wall 91 of the cover portion 84 to the bearings 78B and 74B along the fifth ribs 130 and the sixth ribs 135. Therefore, the lubricating property of the drive gear 79 and the like can be further enhanced.

According to this embodiment, the shaft center 73A of the main shaft 73 is located at a level lower than those of the shaft center 70A of the secondary shaft 70 and the shaft center 77A of the drive shaft 77. When the secondary shaft 70, the drive shaft 77 and the main shaft 73 are at a stop, the liquid surface of the oil 105 is at a level which is higher than that of the bottom end of the first main gear 75 provided on the main shaft 73 and is lower than those of the shaft center 70A of the secondary shaft 70A, the shaft center 77A of the drive shaft 77 and the shaft center 73A of the main shaft 73, respectively. Even when the liquid surface is at such a low level and the amount of the oil 105 is small, the lubricating property of the drive gear 79 and the like can be guaranteed. Therefore, the lubricating property of the drive gear 79 and the like can be highly guaranteed while the amount of oil can be significantly reduced.

The motorcycle 1 in this embodiment includes the above-described gear box 30. Owing to this, the motorcycle 1 can provide the above-described functions and effects.

According to the motorcycle 1 in this embodiment, a portion thereof for transmitting the power from the secondary shaft 70 coupled to the second pulley 64 of the CVT 60 to the drive shaft 77 can provide the above-described functions and effects.

As used herein, the terms forward, rearward, above, below, left and right relate to the position of the respective elements relative to the orientation of the motorcycle as shown in Fig. 1.

### Reference Signs List

- 1: Motorcycle
- 9: Rear wheel
- 30: Gear box
- 40: Engine
- 44: Crankcase
- 60: Belt-type continuously variable transmission
- 70: Secondary shaft (first rotation shaft)
- 72: Secondary gear
- 73: Main shaft (third rotation shaft)
- 75: First main gear
- 76: Second main gear
- 77: Drive shaft (second rotation shaft)
- 79: Drive gear
- 80: Mission case (case)
- 82: Case portion (case main body)
- 84: Cover portion (cover)
- 88: Gear chamber
- 90: Breather chamber
- 91: Inner wall
- 92: Partition
- 94: Breather chamber entrance
- 105: Oil
- 110: First rib
- 115: Second rib
- 120: Third rib
- 125: Fourth rib

## Claims

1. A gear box (30), comprising:
a case (80) in which a gear chamber (88) for storing oil, and a breather chamber (90) separated from the gear chamber (88) by a partition (92) and located above the gear chamber (88), are formed;
a plurality of rotation shafts (70, 73, 77), each of which is at least partially located in the gear chamber (88) so as to be rotatable, the plurality of rotation shafts (70, 73, 77) extending leftward and rightward; and
a plurality of gears (72, 75, 76, 79) located in the gear chamber (88) and respectively provided on the plurality of rotation shafts (70, 73, 77);
wherein:
the partition (92) has a breather chamber entrance (94) formed therein for communicating the gear chamber (88) and the breather chamber (90) to each other;
the case (80) has a breather chamber exit (95) formed therein for communicating the breather chamber (90) and outside of the case (80) to each other; and
an inner wall (91) of the case (80) or the partition (92) has a first rib (110) and a second rib (115) formed thereon, the first rib (110) being located forward to the breather chamber entrance (94) and at least partially located above at least one of the gears (72), and the second rib (115) being located rearward to the breather chamber entrance (94) and at least partially located above at least one of the gears (72);
wherein:
the plurality of rotation shafts (70, 73, 77) include a first rotation shaft (70) located below at least a part of the breather chamber (90); the first rib (110) is located above the first rotation shaft (70);
the plurality of rotation shafts include a second rotation shaft (77); and
the plurality of gears include a gear (79) provided on the second rotation shaft (77);
the second rotation shaft (77) is located rearward to the first rotation shaft (70); **characterized in that**
the inner wall (91) of the case (80) or the partition (92) has a third rib (120) formed thereon which is at least partially located above the gear (79) provided on the second rotation shaft (77).

2. A gear box (30) according to claim 1, wherein the second rib (115) is inclined with respect to the vertical direction so as to be directed downward toward a front end thereof.

3. A gear box (30) according to claim 2, wherein the first rotation shaft (70) is structured to rotate counterclockwise as seen from the left.

4. A gear box (30) according to claim 2 or 3, wherein a bottom end of the second rib (115) is located at a level lower than that of a bottom end of the first rib (110).

5. A gear box (30) according to claim 1, wherein a shaft center of the first rotation shaft (70) is located at a level higher than that of shaft centers of the other rotation shafts (73, 77).

6. A gear box (30) according to one of claims 1 to 5, wherein the second rotation shaft (77) is structured to rotate counterclockwise as seen from the left.

7. A gear box (30) according to one of claims 1 to 6, wherein the second rotation shaft (77) has a diameter larger than those of the other rotation shafts (70, 73).

8. A gear box (30) according to one of claims 1 to 7, wherein:
the plurality of rotation shafts include a third rotation shaft (73) having a shaft center located rearward to a shaft center of the first rotation shaft (70) and forward to a shaft center of the second rotation shaft (77);
the shaft center of the third rotation shaft (73) is located at a level lower than those of the shaft center of the first rotation shaft (70) and the shaft center of the second rotation shaft (77);
the plurality of gears include a gear (75, 76) provided on the third rotation shaft (73); and
the inner wall (91) of the case (80) has a fourth rib (125) formed thereon which is at least partially located forward to the gear provided on the third rotation shaft (73).

9. A gear box (30) according to claim 8, wherein the third rotation shaft (73) is structured to rotate clockwise as seen from the left.

10. A gear box (30) according to one of claims 1 to 9, wherein the first rib (110) and the second rib (115) extend leftward and rightward.

11. A gear box (30) according to one of claims 1 to 10, wherein:
the case (80) includes a case main body (82), and a cover (84) located to the right or to the left of the case main body (82) and assembled with the case main body (82);
the first rib (110) is formed of a rib portion provided in the case main body (82) and a rib portion provided in the cover (84); and
the second rib (115) is formed of a rib portion provided in the case main body (82) and a rib portion provided in the cover (84).

12. A gear box (30) according to claim 11, wherein:
the cover (84) has bearings (102A, 104A, 102B, 104B) formed thereon for supporting one of the rotation shafts (70, 73); and
the inner wall (91) of the cover (84) has another rib (130, 135) formed thereon which extends in a diametric direction of the one of the rotation shafts (70, 73), the another rib (130, 135) being located in the vicinity of the bearings (102A, 104A, 102B, 104B).

13. A gear box (30) according to one of claims 1 to 12, wherein:
the plurality of rotation shafts include a third rotation shaft (73) having a shaft center located rearward to a shaft center of the first rotation shaft (70) and forward to a shaft center of the second rotation shaft (77);
the shaft center of the third rotation shaft (73) is located at a level lower than those of the shaft center of the first rotation shaft (70) and the shaft center of the second rotation shaft (77);
the plurality of gears include a gear (75, 76) provided on the third rotation shaft (73); and
while the first, second and third rotation shafts (70, 73, 77) are at a stop, a liquid surface of the oil is located at a level which is higher than that of a bottom end of the gear (75, 76) provided on the third rotation shaft (73) and is lower than those of the shaft center of the first rotation shaft (70), the shaft center of the second rotation shaft (77) and the shaft center of the third rotation shaft (73), respectively.

## Patentansprüche

1. Ein Getriebekasten (30), der folgende Merkmale aufweist:
ein Gehäuse (80), in dem eine Getriebekammer (88) zum Lagern von Öl und eine Entlüfterkammer (90), von der Getriebekammer (88) durch eine Partition (92) getrennt und über der Getriebekammer (88) angeordnet, gebildet sind;
eine Mehrzahl von Drehwellen (70, 73, 77), von denen jede zumindest teilweise in der Getriebekammer (88) angeordnet ist, um drehbar zu sein, wobei sich die Mehrzahl von Drehwellen (70, 73, 77) nach links und rechts erstrecken; und
eine Mehrzahl von Getrieben (72, 75, 76, 79), die in der Getriebekammer (88) angeordnet sind und jeweils an der Mehrzahl von Drehwellen (70, 73, 77) vorgesehen sind;
wobei:
in der Partition (92) ein Entlüfterkammereingang (94) gebildet ist, um die Getriebekammer (88) und die Entlüfterkammer (90) miteinander kommunikativ zu verbinden;
in dem Gehäuse (80) ein Entlüfterkammerausgang (95) gebildet ist, um die Entlüfterkammer (90) und die Außenseite des Gehäuses (80) miteinander kommunikativ zu verbinden; und
auf einer Innenwand (91) des Gehäuses (80) oder der Partition (92) eine erste Rippe (110) und eine zweite Rippe (115) gebildet sind, wobei die erste Rippe (110) vor dem Entlüfterkammereingang (94) angeordnet ist und zumindest teilweise über zumindest einem der Getriebe (72) angeordnet ist, und die zweite Rippe (115) hinter dem Entlüfterkammereingang (94) angeordnet ist und zumindest teilweise über zumindest einem der Getriebe (72) angeordnet ist;
wobei:
die Mehrzahl von Drehwellen (70, 73, 77) eine erste Drehwelle (70) umfassen, die unter zumindest einem Teil der Entlüfterkammer (90) angeordnet ist;
die erste Rippe (110) über der ersten Drehwelle (70) angeordnet ist;
die Mehrzahl von Drehwellen eine zweite Drehwelle (77) umfassen; und
die Mehrzahl von Getrieben ein Getriebe (79) umfassen, das auf der zweiten Drehwelle (77) vorgesehen ist;
die zweite Drehwelle (77) hinter der ersten Drehwelle (70) angeordnet ist; **dadurch gekennzeichnet, dass**
auf der Innenwand (91) des Gehäuses (80) oder der Partition (92) eine dritte Rippe (120) gebildet ist, die zumindest teilweise über dem Getriebe (79) angeordnet ist, das auf der zweiten Drehwelle (77) vorgesehen ist.

2. Ein Getriebekasten (30) gemäß Anspruch 1, bei dem die zweite Rippe (115) bezüglich der vertikalen Richtung geneigt ist, um zu einem vorderen Ende derselben nach unten gerichtet zu sein.

3. Ein Getriebekasten (30) gemäß Anspruch 2, bei dem die erste Drehwelle (70) strukturiert ist, um sich von links gesehen im Gegenuhrzeigersinn zu drehen.

4. Ein Getriebekasten (30) gemäß Anspruch 2 oder 3, bei dem ein unteres Ende der zweiten Rippe (115) auf einer Ebene angeordnet ist, die niedriger ist als diejenige eines unteren Endes der ersten Rippe (110).

5. Ein Getriebekasten (30) gemäß Anspruch 1, bei dem eine Wellenmitte der ersten Drehwelle (70) auf einer Ebene angeordnet ist, die höher ist als diejenige von Wellenmitten der anderen Drehwellen (73, 77).

6. Ein Getriebekasten (30) gemäß einem der Ansprüche 1 bis 5, bei dem die zweite Drehwelle (77) strukturiert ist, um sich von links gesehen im Gegenuhrzeigersinn zu drehen.

7. Ein Getriebekasten (30) gemäß einem der Ansprüche 1 bis 6, bei dem die zweite Drehwelle (77) einen Durchmesser aufweist, der größer ist als diejenigen der anderen Drehwellen (70, 73).

8. Ein Getriebekasten (30) gemäß einem der Ansprüche 1 bis 7, bei dem:
die Mehrzahl von Drehwellen eine dritte Drehwelle (73) umfassen mit einer Wellenmitte, die hinter einer Wellenmitte der ersten Drehwelle (70) und vor einer Wellenmitte der zweiten Drehwelle (77) angeordnet ist;
die Wellenmitte der dritten Drehwelle (73) auf einer Ebene angeordnet ist, die niedriger ist als diejenigen der Wellenmitte der ersten Drehwelle (70) und der Wellenmitte der zweiten Drehwelle (77);
die Mehrzahl von Getrieben ein Getriebe (75, 76) umfassen, das auf der dritten Drehwelle (73) vorgesehen ist; und
auf der Innenwand (91) des Gehäuses (80) eine vierte Rippe (125) gebildet ist, die zumindest teilweise vor dem Getriebe angeordnet ist, das auf der dritten Drehwelle (73) vorgesehen ist.

9. Ein Getriebekasten (30) gemäß Anspruch 8, bei dem die dritte Drehwelle (73) strukturiert ist, um sich von links gesehen im Uhrzeigersinn zu drehen.

10. Ein Getriebekasten (30) gemäß einem der Ansprüche 1 bis 9, bei dem sich die erste Rippe (110) und die zweite Rippe (115) nach links und rechts erstrecken.

11. Ein Getriebekasten (30) gemäß einem der Ansprüche 1 bis 10, bei dem:
das Gehäuse (80) einen Gehäusehauptkörper (82) und eine Abdeckung (84) umfasst, die rechts oder links von dem Gehäusehauptkörper (82) angeordnet ist und mit dem Gehäusehauptkörper (82) zusammengesetzt ist;
die erste Rippe (110) aus einem Rippenabschnitt, der in dem Gehäusehauptkörper (82) vorgesehen ist und einem Rippenabschnitt, der in der Abdeckung (84) vorgesehen ist, gebildet ist; und
die zweite Rippe (115) aus einem Rippenabschnitt, der in dem Gehäusehauptkörper (82) vorgesehen ist und einem Rippenabschnitt, der in der Abdeckung (84) vorgesehen ist, gebildet ist.

12. Ein Getriebekasten (30) gemäß Anspruch 11, bei dem:
auf der Abdeckung (84) Lager (102A, 104A, 102B, 104B) zum Tragen einer der Drehwellen (70, 73) gebildet sind; und
auf der Innenwand (91) der Abdeckung (84) eine weitere Rippe (130, 135) gebildet ist, die sich in einer diametralen Richtung der einen der Drehwellen (70, 73) erstreckt, wobei die andere Rippe (130, 135) in der Nähe der Lager (102A, 104A, 102B, 104B) angeordnet ist.

13. Ein Getriebekasten (30) gemäß einem der Ansprüche 1 bis 12, bei dem:
die Mehrzahl der Drehwellen eine dritte Drehwelle (73) umfassen mit einer Wellenmitte, die hinter einer Wellenmitte der ersten Drehwelle (70) und vor einer Wellenmitte der zweiten Drehwelle (77) angeordnet ist;
die Wellenmitte der dritten Drehwelle (73) auf einer Ebene angeordnet ist, die niedriger ist als diejenige der Wellenmitte der ersten Drehwelle (70) und der Wellenmitte der zweiten Drehwelle (77);
die Mehrzahl von Getrieben ein Getriebe (75, 76) umfassen, das auf der dritten Drehwelle (73) vorgesehen ist; und
während sich die erste, zweite und dritte Drehwelle (70, 73, 77) an einem Anschlag befinden, eine Flüssigkeitsoberfläche des Öls auf einer Ebene angeordnet ist, die höher ist als diejenige eines unteren Endes des Getriebes (75, 76), das auf der dritten Drehwelle (73) vorgesehen ist und niedriger ist als diejenigen der Wellenmitte der ersten Drehwelle (70), der Wellenmitte der zweiten Drehwelle (77) beziehungsweise der Wellenmitte der dritten Drehwelle (73).

## Revendications

1. Boîte de vitesses (30), comprenant:
un boîtier (80) dans lequel sont formées une chambre d'engrenage (88) destinée à entreposer de l'huile, et une chambre d'aération (90) séparée de la chambre d'engrenage (88) par une cloison (92) et située au-dessus de la chambre d'engrenage (88);
une pluralité d'arbres de rotation (70, 73, 77) situés, chacun, au moins partiellement dans la chambre d'engrenage (88) de manière à pouvoir tourner, la pluralité d'arbres de rotation (70, 73, 77) s'étendant vers la gauche et vers la droite; et
une pluralité d'engrenages (72, 75, 76, 79) situés dans la chambre d'engrenage (88) et prévus respectivement sur la pluralité d'arbres de rotation (70, 73, 77);
dans laquelle:
la cloison (92) présente une entrée de chambre d'aération (94) y formée pour communiquer la chambre d'engrenage (88) et la chambre d'aération (90) l'une avec l'autre;
le boîtier (80) présente une sortie de chambre d'aération (95) y formée pour communiquer la chambre d'aération (90) et l'extérieur du boîtier (80) l'un avec l'autre; et
une paroi intérieure (91) du boîtier (80) ou la cloison (92) présente une première nervure (110) et une deuxième nervure (115) y formées, la première nervure (110) étant située à l'avant de l'entrée de chambre d'aération (94) et au moins partiellement située au-dessus d'au moins l'un des engrenages (72) et la deuxième nervure (115) étant située à l'arrière à l'entrée de chambre d'aération (94) et au moins partiellement située au--dessus d'au moins l'un des engrenages (72);
dans laquelle:
la pluralité d'arbres de rotation (70, 73, 77) comportent un premier arbre de rotation (70) situé au-dessous d'au moins une partie de la chambre d'aération (90); la première nervure (110) est située au-dessus du premier arbre de rotation (70);
la pluralité d'arbres de rotation comportent un deuxième arbre de rotation (77); et
la pluralité d'engrenages comportent un engrenage (79) prévu sur le deuxième arbre de rotation (77);
le deuxième arbre de rotation (77) est situé à l'arrière du premier arbre de rotation (70);
**caractérisée par le fait que**
la paroi intérieure (91) du boîtier (80) ou la cloison (92) présente une troisième nervure (120) y formée qui est au moins partiellement située au-dessus de l'engrenage (79) prévu sur le deuxième arbre de rotation (77).

2. Boîte de vitesses (30) selon la revendication 1, dans laquelle la deuxième nervure (115) est inclinée par rapport à la direction verticale, de manière à être orientée vers le bas vers une extrémité avant de cette dernière.

3. Boîte de vitesses (30) selon la revendication 2, dans laquelle le premier arbre de rotation (70) est structuré de manière à tourner dans le sens antihoraire, tel que vu depuis le côté gauche.

4. Boîte de vitesses (30) selon la revendication 2 ou 3, dans laquelle une extrémité inférieure de la deuxième nervure (115) est située à un niveau plus bas que celui d'une extrémité inférieure de la première nervure (110).

5. Boîte de vitesses (30) selon la revendication 1, dans laquelle un centre d'arbre du premier arbre de rotation (70) est situé à un niveau plus élevé que celui des centres d'arbre des autres arbres de rotation (73, 77).

6. Boîte de vitesses (30) selon l'une des revendications 1 à 5, dans laquelle le deuxième axe de rotation (77) est structuré de manière à tourner dans le sens antihoraire, tel que vu depuis le côté gauche.

7. Boîte de vitesses (30) selon l'une des revendications 1 à 6, dans laquelle le deuxième axe de rotation (77) présente un diamètre plus grand que ceux des autres axes de rotation (70, 73).

8. Boîte de vitesses (30) selon l'une des revendications 1 à 7, dans laquelle:
la pluralité d'arbres de rotation comportent un troisième arbre de rotation (73) présentant un centre d'arbre situé à l'arrière d'un centre d'arbre du premier arbre de rotation (70) et à l'avant d'un centre d'arbre du deuxième arbre de rotation (77);
le centre d'arbre du troisième arbre de rotation (73) est situé à un niveau plus bas que ceux du centre d'arbre du premier arbre de rotation (70) et du centre d'arbre du deuxième arbre de rotation (77);
la pluralité d'engrenages comportent un engrenage (75, 76) prévu sur le troisième arbre de rotation (73); et
la paroi intérieure (91) du boîtier (80) présente une quatrième nervure (125) y formée qui est au moins partiellement située à l'avant de l'engrenage prévu sur le troisième arbre de rotation (73).

9. Boîte de vitesses (30) selon la revendication 8, dans laquelle le troisième arbre de rotation (73) est structuré de manière à tourner dans le sens horaire, tel que vu depuis le côté gauche.

10. Boîte de vitesses (30) selon l'une des revendications 1 à 9, dans laquelle la première nervure (110) et la deuxième nervure (115) s'étendent vers la gauche et vers la droite.

11. Boîte de vitesses (30) selon l'une des revendications 1 à 10, dans laquelle:
le boîtier (80) comporte un corps principal de boîtier (82), et un couvercle (84) situé à droite ou à gauche du corps principal de boîtier (82) et assemblé avec le corps principal de boîtier (82);
la première nervure (110) est formée d'une partie de nervure prévue dans le corps principal de boîtier (82) et d'une partie de nervure prévue dans le couvercle (84); et
la deuxième nervure (115) est formée d'une partie de nervure prévue dans le corps principal de boîtier (82) et d'une partie de nervure prévue dans le couvercle (84).

12. Boîte de vitesses (30) selon la revendication 11, dans laquelle:
le couvercle (84) présente des roulements (102A, 104A, 102B, 104B) y formés pour supporter l'un des arbres de rotation (70, 73); et
la paroi intérieure (91) du couvercle (84) présente une autre nervure (130, 135) y formée qui s'étend dans une direction diamétrale de l'un des arbres de rotation (70, 73), l'autre nervure (130, 135) étant située à proximité des roulements (102A, 104A, 102B, 104B).

13. Boîte de vitesses (30) selon l'une des revendications 1 à 12, dans laquelle:
la pluralité d'arbres de rotation comportent un troisième arbre de rotation (73) présentant un centre d'arbre situé à l'arrière d'un centre d'arbre du premier arbre de rotation (70) et à l'avant d'un centre d'arbre du deuxième arbre de rotation (77);
le centre d'arbre du troisième arbre de rotation (73) est situé à un niveau plus bas que ceux du centre d'arbre du premier arbre de rotation (70) et du centre d'arbre du deuxième arbre de rotation (77);
la pluralité d'engrenages comportent un engrenage (75, 76) prévu sur le troisième arbre de rotation (73); et
tandis que les premier, deuxième et troisième axes de rotation (70, 73, 77) se trouvent en butée, une surface liquide de l'huile est située à un niveau qui est plus élevé que celui d'une extrémité inférieure de l'engrenage (75, 76) prévu sur le troisième arbre de rotation (73) et qui est plus bas que ceux respectivement du centre d'arbre du premier arbre de rotation (70), du centre d'arbre du deuxième arbre de rotation (77) et du centre d'arbre du troisième arbre de rotation (73).
